# EUROPEAN PATENT APPLICATION

(11) **EP 1 053 674 A1**
(43) Date of publication of application: **22.11.2000**
(21) Application number: 00201758.0
(22) Date of filing: 18.05.2000
(51) Int. Cl.: A01K 1/00, F24F 3/16

(54) **Air conditioning apparatus**

(30) Priority: 18.05.1999 NL 1012089
(71) Applicant: TOLSMA TECHNIEK B.V., NL-8304 AT Emmeloord (NL)
(72) Inventor: Tolsma, Auke, 8604 ZG Sneek (NL)
(74) Representative: Prins, Adrianus Willem

(57) **Abstract**

An air conditioning apparatus comprises an air cleaner (9) with several purification compartments (20,21) which are separated by a control valve (22). In a first compartment (20) hot and contaminated air (A) is extracted from a working accommodation. From one of the following compartments (21), purified air (B) is led back into the working accommodation. In a fixed position of the control valve (22), from the first compartment (20) a particular fraction (D) of the air purified therein is released to the atmosphere, while the further air is mixed in the second compartment with an equally large fraction of air (C) from outside, and subsequently is returned, purified, to the working accommodation (B). In a variable position of the control valve (22), depending on the temperature of the outside air, the air stream between the purification compartments (20,21) is controllable, whereby the air to be purified and to be introduced into the working accommodation is wholly or partly drawn in from outside, while air extracted from the working accommodation and purified is wholly or partly released to the atmosphere.

## Description

The present invention relates to an air conditioning apparatus for a working accommodation, such as a stable for cattle or a storage accommodation for agricultural products, comprising an air cleaner for purifying hot and contaminated air which is drawn in both from a working accommodation and from outside, and a cooling device to enable purified air from the air cleaner to be cooled and returned into the working accommodation, while by means of an external discharge an amount of purified air per unit time is discharged to the atmosphere, and by means of an air inlet the same amount of air per unit time is drawn in from the atmosphere.

Such an air conditioning apparatus is known from EP-A-0 635 205. In the climate control system described in that document, hot and contaminated air is passed from a working accommodation through an air cleaner designed as a filter, whereafter a percentage of the order of 10 to 20% of the purified air is released to the atmosphere and the remaining air is supplied to a cooling device. The cooled air is subsequently mixed with air from outside and thereafter passed back into the working accommodation from above. The outside air drawn in serves to keep the oxygen content of the air in the working accommodation at a certain level. Since the amount of air in the working accommodation does not change, the amount of air discharged per unit time is equal to the amount of air drawn in per unit time.

In the European patent application mentioned, the working accommodation is designed in particular as a stable for pigs, with the air in the stable being warmed up by both the body heat of the animals present therein and by a heating element additionally used to dry the solid and liquid excrements of the animals, received on a conveyor belt. The air extracted from the bottom part of the stable and supplied to the filter accordingly contains all kinds of waste substances, in particular ammonia and other undesired gases. The disadvantage of the climate control system described in the European patent application mentioned is that the energy consumption needed to cool the air purified in the filter to the temperature required for the stable at a desired relative humidity is rather high. The air extracted from the bottom of the stable has a temperature in the order of 27° C, while the temperature of the clean air to be introduced from above into the stable should be about 13 to 14° C at a relative humidity of about 80%.

The object of the invention is, while maintaining all advantages of the known climate control system, to considerably reduce the energy consumption for obtaining the desired temperature and relative humidity of the air in the working accommodation. In addition, the air from the working accommodation and from outside should be purified of all kinds of waste material, in particular dust particles and undesired gases, such as ammonia.

To that end, according to the invention, the air conditioning apparatus such as it is described in the opening paragraph is characterized in that the air cleaner comprises several purification compartments which are separated from each other by a control valve, wherein in a first fixed position of the control valve from a first purification compartment a particular fraction of the air purified therein is discharged from the working accommodation to the atmosphere, while the further air is mixed in one of the next purification compartments with an equally large fraction of outside air drawn in, and subsequently is returned, purified, to the working accommodation, and wherein in a second variable position of the control valve, depending on the temperature of the outside air, the air stream between the purification compartments is controllable, while the air to be purified and to be introduced into the working accommodation is wholly or partly drawn in from outside, and the air extracted from the working accommodation and purified is wholly or partly released to the atmosphere.

This makes it possible, especially when the temperature of the outside air is lower than that of the air extracted from the working accommodation, and taking into account the absolute humidity of the air, instead of using the hot air extracted from the working accommodation (mixed with a fraction of outside air), to use virtually exclusively air drawn in from outside, so that after the purification of the air drawn in from outside, it needs to be cooled to a lesser extent to obtain the desired value. At the same time, the outside temperature, taking into account the absolute humidity of the outside air, may not be too low either. If such is the case, a part of the air extracted from the working accommodation and purified will be used for heating the cold air drawn in from outside and to be purified.

In the fixed position of the control valve, the percentage of air drawn in from outside and air released to the atmosphere is between 0 and 40%, in particular between 15 and 25%, while in the variable position of the control valve the percentage of air drawn in from outside and air released to the atmosphere is between 0 and 100%, in particular between 15 and 100%. In the following, for the sake of simplicity, it will be assumed that in the fixed position of the control valve 20% of outside air is drawn in, and in the variable position, depending on the outside temperature, 20-100%.

To be able to use air 100% drawn in from outside, it is undesirable when the outside temperature is too high or too low. In other words, when the outside temperature is higher than a particular value (T₀), the control valve is in the first fixed position, and when the outside temperature is lower than this particular value (T₀), the control valve is in the second variable position.

When the air supplied from the second purification compartment to the cooling device has a relative humidity of 100%, the decision whether the control valve is to be set in the first or in the second position must be based on the temperature of the outside air. Used as a measure in this case, however, is not the normally measured outside temperature but the so-called "wet sphere temperature", which is the temperature at a relative humidity of 100%. Accordingly, this wet sphere temperature, given a relative humidity much lower than 100%, will lie clearly below the temperature measured normally (the dry sphere temperature). The above-mentioned particular temperature value (T₀) in that case is the wet sphere temperature value of the outside air. A supply of air of a relative humidity of 100% to the cooling device is obtained in particular by designing each of the two purification compartments as air washers. As already stated, the control valve is in the fixed position if the wet sphere temperature of the outside air is higher than the particular temperature value (T₀); this first fixed position is distinct from the second variable position in that in the first position the addition of 20% outside air to the air to be led back into the working accommodation merely serves to keep the oxygen content in the working accommodation at a certain level, while in the second position, when the wet sphere temperature of the outside air is lower than (T₀), the air from outside can be used (in addition to keeping the oxygen content in the working accommodation at a particular level) to lower the temperature of the air stream from the working accommodation. Although at an increasingly lower wet sphere temperature of the outside air, a small outside air stream can suffice, this air stream, with a view to keeping the oxygen content in the working accommodation at a particular level, is bound to a minimum of preferably 20%.

A heating element may be connected to the cooling device, while, when purified air of a relative humidity of 100% is supplied to the cooling device, in the cooling device the wet sphere temperature of this air is lowered so far that upon a temperature increase through the heating element, both the relative humidity and the temperature of the air to be recycled into the working accommodation are adjusted to the desired value.

The invention will now be further explained with reference to the accompanying drawing, wherein:
Fig. 1 shows a cross section of a pig house in which the air conditioning apparatus according to the invention is used;
Fig. 2 schematically shows an exemplary embodiment of an air conditioning apparatus according to the invention, and
Fig. 3 shows an air cleaner present therein, in partly broken-away view.

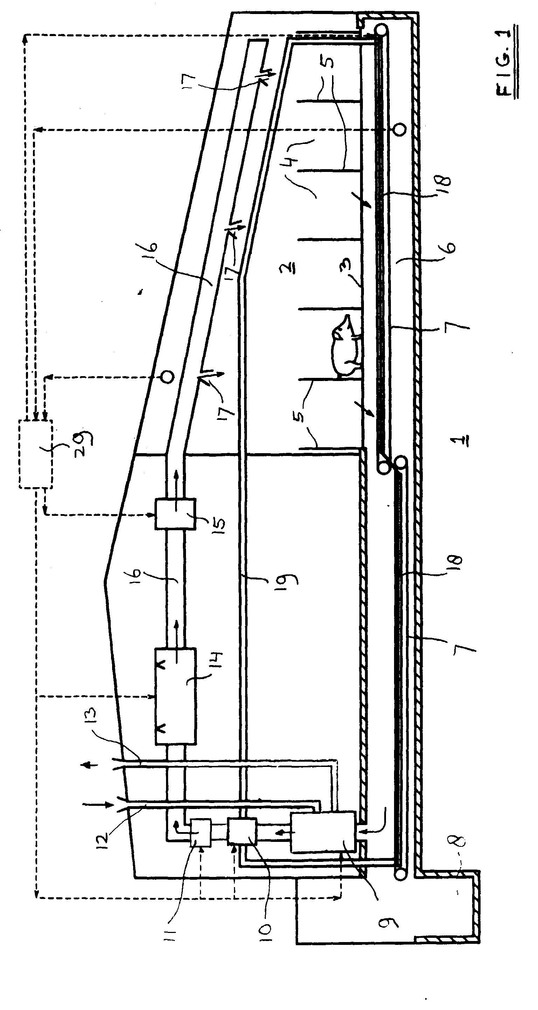

Fig. 1 shows a cross section of a stable 1 for pigs. Such a stable has already been extensively described in EP-A- 0 635 205 and will therefore be elucidated only summarily here. The stable comprises a space 2 in which the pigs are accommodated. This accommodation space 2 is divided into separate subspaces or boxes 4 for one or more animals. The subspaces are separated from each other by partitions 5. The floor 3 in each of the subspaces 4 is fitted with a first portion which consists of a continuous concrete floor which functions as lying space for the cattle and a second portion which is provided with openings which set the accommodation space into open communication with the discharge space 6 located under the floor 3. The second portion of the floor can be fitted, for instance, with metal grids. The solid and liquid excrements of the cattle end up via such grids in a discharge path in the form of a conveyor belt system 7 which is arranged in the discharge space 6, and are discharged by this conveyor belt system to a collecting space 8.

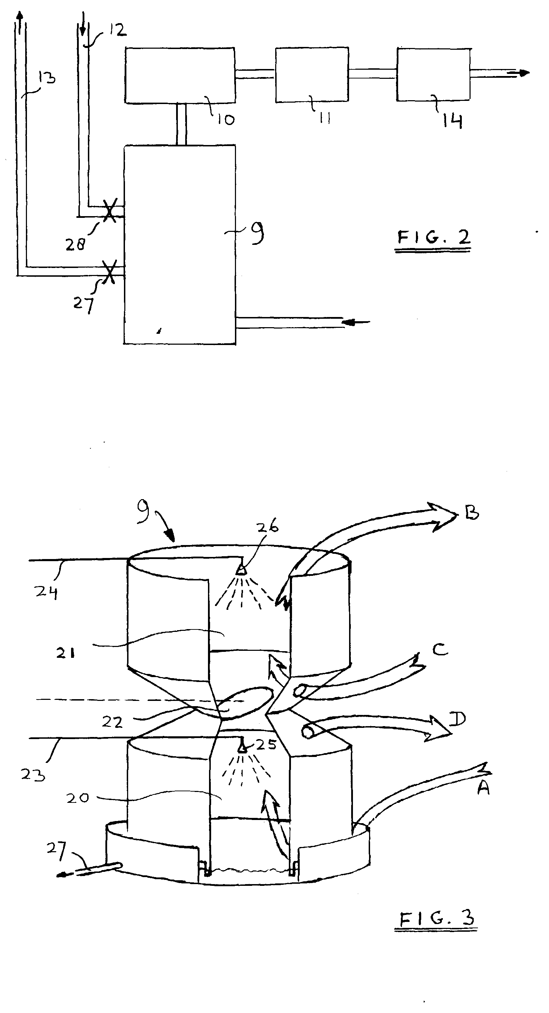

The stable is designed to be virtually completely gas-tight, so that in principle no air and gases can escape from the stable to the atmosphere. To still obtain a desired air circulation through the stable, to keep the air pure and at a desired temperature with a desired degree of humidity, a climate control system is present. This climate control system comprises an air conditioning apparatus according to the invention, which in this exemplary embodiment is made up of an air cleaner 9, a cooling device 10 and a heating element 11. Connected to the air cleaner 9 is an air inlet duct 12 and an air discharge duct 13. The air conditioning apparatus, whose operation will be further discussed hereinafter, delivers purified air of a particular temperature and of a particular relative humidity and passes same through a UV air decontamination space 14. The air is subsequently transported by means of a fan 15 through the air transport path 16 and by way of openings 17 therein introduced into the accommodation space 2. The air is subsequently extracted from the top of the accommodation space down into the discharge space 6 and hence through the discharge space 6 to the inlet of the air conditioning apparatus. The air is initially warmed by the animals themselves. The thus warmed air is passed into the discharge space 6 along the conveyor belt system 7 to dry the animal excrements dropped onto it. To accelerate this drying process, the conveyor belt system 7 can be heated by a separate heating system 18. Here, advantageous use can be made of the heated cooling water which leaves the cooling device 10 and which can be pumped round via the duct 19 and then passes through the heating system 18. The hot air drawn in through the discharge space 6 and conveyed to the air conditioning apparatus contains all kinds of waste matter, including ammonia and other undesired gases. This air must be purified and cooled to the desired temperature, while further the desired relative humidity is to be attained. Further, the oxygen content in the accommodation space needs to be kept at a particular level. The measures required for this purpose must be realized in the air conditioning apparatus according to the invention, such as it will be further explained with reference to Figs. 2 and 3.

The air cleaner designated by 9 in Figs. 2 and 3 comprises two purification compartments 20 and 21 which are separated from each other by a control valve 22. The two purification compartments are designed as air washers and to that end comprise a water supply duct 23, 24, respectively, and a sprinkler head 25, 26, respectively, while further at the underside of the purification compartment 20 a water discharge duct 27 is present. In Fig. 3 the air supply from the discharge space 6 is indicated by arrow A, the air discharge to the cooling device 10 by arrow B, the air supply from outside via the air inlet duct 12 by arrow C, and the air discharge to the atmosphere via the air discharge duct 13 by arrow D. In the ducts 12 and 13, controllable valves 27 and 28 may be present to enable the air discharge from the compartment 20 and the air supply to the compartment 21 to be set.

The amount of air that is drawn in per unit time via the duct 12 is then equal to the amount of air that is discharged to the atmosphere per unit time over the duct 13.

The purifier 9 works in two positions. In a first fixed position, the control valve is set such that the two compartments 20 and 21 communicate with each other, such that the air which is drawn in from the stable (arrow A) is mixed with fresh air, 20% in this example, from outside (arrow C), whereafter the air purified in the two air washers is delivered to the cooling device according to arrow B. Naturally, in that case also 20% of air which has been extracted from the accommodation space is to be discharged (arrow D). This 20% of discharged air is air which has been purified in the compartment 20. Accordingly, from the compartment 20, 80% of the purified stable air goes to the compartment 21, where this air, along with the air drawn in from outside, is further purified and supplied to the cooling device 10.

In the second, variable position, the control valve is set such that, depending on the wet sphere temperature of the outside air, the compartments 20 and 21 are closed off from each other to a greater or lesser extent. The air from the stable is purified in the compartment 20 and, when the above-mentioned temperature of the outside air is not too low, in this example discharged 100% to the atmosphere, while an equal amount of air is drawn in from outside, purified in the compartment 21 and supplied to the cooling device 10. When the above-mentioned temperature of the outside air decreases further, however, the control valve in this variable position will be set such that thereby an increasingly larger air stream between the two compartments arises as the outside temperature is lower, though with a maximum, of 80% in this example.

On the basis of a numerical example, presently the conditions will be discussed under which the air cleaner is operative in the first and in the second position, as well as the manner in which the air conditioning apparatus operates. Let it be assumed that the cooling device 10 is supplied with air of a temperature of at most about 17°C, a relative humidity of 100% and an absolute humidity of about 12 g of water per kg of air. In the cooling device 10, this air is cooled to a temperature of about 10°C and again a relative humidity of 100%. The two temperature values mentioned are wet sphere temperature values. Further, in the cooling device the absolute humidity decreases to about 7.5 g per kg of air; the water of condensation thereby released can be discharged as drinking water for the animals. The cooled air is heated a little in the heating element 11, whereby the relative humidity decreases. After the air is decontaminated in the UV decontamination device 14, eventually air of a temperature of about 13° C and of a relative humidity of about 80% is led back into the stable by means of a fan 15. These values have been found to be highly satisfactory in a pig house. As already mentioned, this air is passed from the top down and subsequently via the discharge space 6 to the air cleaner 9. The air is meanwhile warmed by the body heat of the animals to approximately a temperature of about 24° C with a relative humidity of about 70% and passed along the conveyor belt system 7. By making use of the additional heating element 18, eventually air mixed with all kinds of waste, in particular ammonia, and having a temperature of about 27° C and a relative humidity of about 60% is supplied to the air cleaner 9. There, the air is washed with water of about 10° C, and purified air of at most about 17° C and a relative humidity of 100% can be delivered, either wholly or partly, to the atmosphere (in the variable position of the control valve 22), or, mixed with 20% outside air, to the cooling device (in the fixed position of the control valve 22).

It has been found that the amount of energy required to cool the air in the cooling device can be reduced to a considerable extent by causing the position of the control valve 22 to be dependent on the outside temperature. In the present exemplary embodiment, a distinction is then made between a wet sphere outside temperature of above 17° C and a wet sphere temperature of below 17° C.

When the wet sphere outside temperature is above 17° C (temperature T₀), then, with a view to keeping the oxygen content of the air in the stable at a particular level, the control valve 22 will be set in the fixed position and 80% of the air extracted from the stable will traverse the two compartments, while admitting only 20% outside air. More outside air than is necessary for keeping the oxygen content at a particular level is not desirable, since this air merely necessitates more energy for cooling.

When the wet sphere outside temperature is below about 17° C, the control valve 22 will be set in the variable position and, when this outside temperature falls below 17° C, initially full use can be made of outside air drawn in to make the air circulation through the stable possible, since this air does not need to be cooled, or hardly so, so that a considerable energy saving is obtained. If the above-mentioned outside temperature below 17° C drops further, it is not favorable to make 100% use of the outside air, since the air must then be separately heated. The control valve then remains in the variable position, but is controlled therein depending on the outside temperature referred to. According as this temperature becomes lower, an increasingly larger fraction of air extracted from the stable will be mixed with the air drawn in from outside, with the understanding, however, that the amount of outside air will continue to account for at least 20% of the air stream to keep the oxygen content of the air in the stable at a particular level. Taking this limitation into account, the air from the stable is therefore used to an increasing extent to heat the air admixed from outside, so that no separate heating means need to be present.

In Fig. 1 a control unit 29 is represented for controlling the various parts, such as for instance the transport system 7, the air cleaner 9, in particular the control valve 22 therein, the cooling device 10, the heating element 11, the UV decontamination unit 14 and the fan 15. Further, inside and outside the stable, temperature and humidity sensors are arranged. In particular, a sensor for determining the wet sphere outside temperature should be present. Instead of including the control means for the air conditioning apparatus in the unit 29, they can also be present as a separate control unit in the air conditioning apparatus.

By employing the air conditioning plant, an energy saving for the cooling device in the order of 60 to 80% can be achieved, while further a climate control system is made possible whereby the air is refreshed to a sufficient extent, the air is purified of waste, in particular ammonia, dust particles are removed from the air, and the air to be recycled to the stable is decontaminated. Further, a separate disinfectant may be added to the water supplied to the air washers.

When instead of being used in a pig house, the invention is to be used in, for instance, a storage space for potatoes, the above-described air conditioning apparatus according to the invention can be employed for an air circulation system whereby in the space a temperature of about 4°C with a relative humidity of 100% is maintained. The air sucked between the potatoes is then raised in temperature too, and this air too can be contaminated by waste matter released by the potatoes. In that case, too, the oxygen content of the air in the storage space needs to be held at a particular level. The UV decontamination device can then be used for the control of potato diseases. When the invention is utilized in a storage space for onions, a temperature of about 0° C and a relative humidity of about 60% will have to be maintained.

From the above, it will be clear that the invention can be utilized in any working accommodation for which a climate control system is present.

Accordingly, the invention is not limited to the exemplary embodiment described with reference to the drawing, but comprises all kinds of modifications thereof, naturally insofar as these fall within the scope of protection of the following claims.

## Claims

1. An air conditioning apparatus for a working accommodation, such as a stable for cattle or a storage accommodation for agricultural products, comprising an air cleaner for purifying hot and contaminated air which is drawn in both from a working accommodation and from outside, and a cooling device to enable purified air from the air cleaner to be cooled and returned into the working accommodation, while by means of an external discharge an amount of purified air per unit time is discharged to the atmosphere, and by means of an air inlet the same amount of air per unit time is drawn in from the atmosphere, characterized in that the air cleaner comprises several purification compartments which are separated from each other by a control valve, wherein in a first fixed position of the control valve from a first purification compartment a particular fraction of the air purified therein is discharged from the working accommodation to the atmosphere, while the further air is mixed in one of the next purification compartments with an equally large fraction of outside air drawn in, and subsequently is returned, purified, to the working accommodation, and wherein in a second variable position of the control valve, depending on the temperature of the outside air, the air stream between the purification compartments is controllable, whereby the air to be purified and to be introduced into the working accommodation is wholly or partly drawn in from outside, and the air extracted from the working accommodation and purified is wholly or partly released to the atmosphere.

2. An air conditioning apparatus according to claim 1, characterized in that in the first position of the control valve the percentage of air drawn in from outside and of air released to the atmosphere is between 0 and 40%, in particular between 15 and 25%.

3. An air conditioning apparatus according to claim 1 or 2, characterized in that in the second position of the control valve the percentage of air drawn in from outside and of air released to the atmosphere is between 0 and 100% and in particular between 15 and 100%.

4. An air conditioning apparatus according to any one of the preceding claims, characterized in that when the outside temperature is higher than a first particular value (T₀), the control valve is in the first position, while when the outside temperature is lower than this particular value (T₀), the control valve is in the second position.

5. An air conditioning apparatus according to claim 4, characterized in that said temperature value (T₀) denotes the "wet sphere temperature" of the outside air.

6. An air conditioning apparatus according to any one of the preceding claims, characterized in that each of the purification compartments is designed as an air washer.

7. An air conditioning apparatus according to claim 5, characterized in that a heating element is connected with the cooling device, while, when the cooling device is supplied with purified air of a relative humidity of 100%, in the cooling device the wet sphere temperature of this air is lowered so far that upon a temperature increase through the heating element both the relative humidity and the temperature of the air to be led back into the working accommodation are adjusted to the desired value.
